# EUROPÄISCHE PATENTSCHRIFT

(11) **EP 1 853 134 B1**
(45) Veröffentlichungstag und Bekanntmachung des Hinweises auf die Patenterteilung: **02.07.2014**
(21) Anmeldenummer: 06700459.8
(22) Anmeldetag: 10.01.2006
(51) Int. Cl.: A47B 47/00, F16B 12/44

(54) **Verbindungsknoten**
Connection node
Noeud de connection

(30) Priorität: 16.02.2005 DE 102005009172
(43) Veröffentlichungstag der Anmeldung: 14.11.2007
(73) Patentinhaber: Burkhardt Leitner Constructiv GmbH & Co. KG, 70565 Stuttgart (DE)
(72) Erfinder: DAUBNER, Michael, 70174 Stuttgart (DE); GLANZ, Robert, 70327 Stuttgart (DE); DOBER, Andreas, 70180 Stuttgart (DE)
(74) Vertreter: Gleiss, Alf-Olav
(86) Internationale Anmeldenummer: PCT/EP2006/000131
(87) Internationale Veröffentlichungsnummer: WO 2006/087051

(56) Entgegenhaltungen:
- EP-A- 0 684 394
- DE-B- 1 176 810
- DE-C- 666 217
- US-A- 4 993 687
- US-A- 5 074 094

## Beschreibung

Die Erfindung betrifft einen Verbindungsknoten zum kraftschlüssigen Verbinden von Streben eines Tragwerks.

Verbindungsknoten der hier angesprochenen Art sind seit langem bekannt, siehe z.B US 2002/0189191 A. Sie dienen dazu, als Tragelemente bezeichnete Profile so miteinander zu verbinden, dass eine Rahmenstruktur beziehungsweise ein Tragwerk entsteht, in das beispielsweise Wandelemente oder Regalelemente einsetzbar sind. Derartige Tragwerke stellen zwar eine sichere Verbindung von steckbaren Elementen dar und eignen sich daher besonders für den Bereich des Messebaus und im Regalbau. Die Belastbarkeit der Tragwerke bekannter Art ist jedoch begrenzt.

Es ist daher Aufgabe der Erfindung, ein Verbindungsknoten zu schaffen, der zur Herstellung statisch stabiler Flächen oder Wandelemente geeignet ist.

Die Aufgabe wird erfindungsgemäß durch die Merkmale des unabhängigen Anspruchs gelöst.

Erfindungsgemäß wird ein Verbindungsknoten vorgeschlagen, wobei der Verbindungsknoten sechs im Wesentlich ringförmig ausgebildeten Strebenaufnahmen aufweist, die zentral auf jeweils einer gedachten Würfelfläche des Verbindungsknotens angeordnet sind. Auf den Umfang den Strebenaufnahmen gehen viergleichmäßig verteilten Verlängerungen in Form von Armen aus, die parallel zu gedachten Kanten der gedachten Würfelflächen laufen und sich bis zu einer senkrecht dazu verlaufenden Kante der gedachten Würfelfläche erstrecken. Vorzugsweise verlaufen die Arme auch parallel zur Würfelfläche. Jeweils ein Arm einer Strebenaufnahme trifft sich mit einem orthogonal dazu angeordneten Arm einer nächsten Strebenaufnahme auf der orthogonal angeordneten Würfelfläche und bildet eine Öse. Zur Herstellung einer diagonalen Verbindung in einer von Verbindungsknoten und Streben aufgespannten Fläche kann ein hakenförmiges Verbindungselement in die wenigstens eine Öse des Verbindungsknotens eingehakt werden und ein weiteres hakenförmiges Verbindungselement in die diagonal über die Fläche gegenüberliegende Öse eingehakt werden. Vorteilhafterweise wird somit eine Verbindung zwischen dem Verbindungsknoten und den Streben durch Diagonalstreben stabilisiert, und es können mit dieser Konstruktion statisch stabile Flächen und auch tragende Elemente mit hoher Belastbarkeit gebaut werden. Beispielsweise können freitragende Elemente mit einer Länge von etwa bis zu 10m hergestellt werden. Das hakenförmige Verbindungselement kann zur Befestigung einer spannbaren Diagonalstrebe vorgesehen sein. Der erfindungsgemäß verbindungsknoten eignet sich damit vorzugsweise für Decken, aber auch für Ablagen und sonstige belastbare Flächen. Der Verbindungsknoten ist somit nicht nur ästhetisch ansprechend, sondern eignet sich auch für vielfältige Kombinationsmöglichkeiten von Tragwerken, beispielsweise auch in Kombination mit einer Wandhalterung.

Das hakenförmige Verbindungselement ist zweckmäßigerweise mit der Öse in eine selbsthemmende Verbindung bringbar, die im belasteten Zustand unter Zug gesetzt werden kann. Mit dieser Konstruktion kann insbesondere eine Diagonalverstrebung erreicht werden. Ein Verbindungselement umfasst wenigstens ein Hakenelement, eine Spannhülse und ein Fixierelement. Zur Stabilisierung der Verbindung kann das Hakenelement mit einem Widerhaken versehen sein, wodurch das hakenförmige Verbindungselement in der Öse verrastet. Es kann auch vorgesehen sein, dass die orthogonal aufeinander treffenden Arme einen Abstand zueinander einhalten, der vorzugsweise kleiner ist als ein Durchmesser des Hakens. Der Abstand beträgt beispielsweise 2 bis 3 mm. Durch eine geeignete Formgebung des Hakens, beispielsweise eine Rastnase, kann damit eine zusätzliche Arretierung des Hakens in der Öse erzielt werden.

Das Hakenelement weist bevorzugt an seinem im montierten Zustand vom Verbindungsknoten abgewandten freien Ende eine Aufnahmeöffnung auf, in welche die Diagonalstrebe einführbar ist. Die Diagonalstrebe ist vorzugsweise aus Draht gebildet, wodurch eine besonders vorteilhafte Zugspannung erzielt werden kann. Es kann jedoch auch vorgesehen sein, dass die Diagonalstrebe als Stange, beispielsweise als Teleskopstange, oder sonstige Tragelemente bekannter Art ausgebildet ist. Besonders bevorzugt weist die Diagonalstrebe an ihren freien Enden jeweils eine Erweiterung auf, beispielsweise in Form einer beidseitig gepressten Kuppe, die im montierten Zustand in der entsprechend ausgebildeten Aufnahmeöffnung des Hakenelements einrastet Zur Fixierung dieser Verbindung können das Verbindungselement und die Diagonalstrebe mittels der Spannhülse verbunden werden. Die Haltekraft von handelsüblichen Spannhülsen lässt vorteilhafterweise auch bei häufigem Gebrauch und starken Belastungen nicht nach, so dass damit eine stabile Verbindung herstellbar ist. Gerade im Messebau sind diese Kriterien durch das oftmalige Auf- und Abbauen von Messeständen maßgeblich. Zur Erleichterung bei der Montage kann die Spannhülse auf ihrer Oberfläche mit einer Griffstruktur versehen sein. Anschließend können die verbundenen Elemente mit einem Fixierelement, beispielsweise einem Fixierschlauch, vorzugsweise aus Kunststoff, umgeben werden, wodurch ein zusätzlicher Schutz gegen ein ungewolltes selbsttätiges Lösen erzielt wird.

Das hakenförmige Verbindungselement kann auch zur Aufnahme einer Haltevorrichtung, beispielsweise für ein flächig ausgebildetes Element, insbesondere ein Wandelement, vorgesehen sein. Das hakenförmige Verbindungselement ist bei dieser bevorzugten Ausführungsform als Wandplattenhalter ausgebildet. Es kann jedoch auch jedes andere geeignete Material wie beispielsweise Stoffe, Folien, harte Füllungen, Glas und dgl. in die Haltevorrichtung eingespannt werden. Das Verbindungselement ist vorzugsweise so gestaltet, dass es nach Einhängen in die Öse freitragend ist, um eine Montage der flächigen Elemente zu erleichtern. Die als Wandplattenhalter ausgestaltete Haltevorrichtung kann beispielsweise als Plattenhaltehaken ausgestaltet sein und umfasst ein Hakenelement, das in die Ösen des Verbindungsknotens eingehakt werden kann, und ein am gegenüberliegenden freien Ende des Verbindungselements angeordneten erstes scheibenförmiges Element, beispielsweise eine Kunststoffscheibe. Zur Herstellung einer Klemmvorrichtung für ein Wandelement ist zweckmäßigerweise ein zweites scheibenförmiges Element vorgesehen, beispielsweise eine Schraubspannhülse, wobei das Wandelement zwischen dem ersten scheibenförmigen Element und der Schraubspannhülse eingespannt und fixiert werden kann.

Ein Verbindungselement zur Herstellung einer Haltevorrichtung für ein Wandelement umfasst wenigstens ein Hakenelement und ein erstes scheibenförmiges Element, das in Verbindung mit einem zweiten scheibenförmigen Element eine Haltevorrichtung für ein Wandelement ausbildet.

Die scheibenförmigen Elemente weisen insbesondere eine zentrale Bohrung auf zur Aufnahme eines Verbindungsmittels. Zur Fixierung und Stabilisierung des zwischen den Scheiben eingeklemmten Wandelements können Kunststoffscheiben und Abstandshalter vorgesehen werden. Besonders bevorzugt weist das zweite scheibenförmige Element ein Langloch auf, wodurch vorteilhafterweise eine Stabilisierung der Elemente nach allen Richtungen in der Art eines Adapters erzielt werden kann.

Mit der vorliegenden Erfindung kann werkzeuglos ein vorgespanntes, tragfähiges und stabiles Tragwerksystem hergestellt werden, das nach der Art eines Baukastensystems mit genormten Verbindungselementen beliebig kombinierbar und erweiterbar ist.

Sämtliche Verbindungselemente können leicht mit einem üblichen Stanz- oder Biegeverfahren hergestellt werden, so dass die Produktionskosten gering gehalten werden können. Soweit möglich, sind sämtliche Streben und Diagonalstreben aus Aluminium gefertigt, um eine leichte Bauweise zu ermöglichen und das Gesamtgewicht des Tragwerks zu reduzieren. Die übrigen Elemente sind vorzugsweise aus Edelstahlfeinguss gefertigt. Das Tragwerk ist sehr leichtgewichtig und nimmt im zerlegten Zustand sehr wenig Volumen ein, was sich positiv auf die Transportfähigkeit auswirkt.

Weitere Ausführungsformen, Aspekte und Vorteile der Erfindung ergeben sich auch unabhängig von ihrer Zusammenfassung in Ansprüchen, ohne Beschränkung der Allgemeinheit anhand von in der Zeichnung dargestellten Ausführungsbeispielen der Erfindung.

Die Erfindung wird im Folgenden anhand der Zeichnung näher erläutert.

Es zeigen:
- Fig. 1 a,b: einen Schnitt durch einen erfindungsgemäßen Verbindungsknoten (Fig. 1a) sowie eine perspektivische Darstellung des Verbindungsknotens (Fig. 1b);
- Fig. 2: eine Darstellung einer Ausführungsform eines Tragwerks mit Verbindungsknoten und Streben;
- Fig. 3: eine Darstellung einer alternativen Ausführungsform des Tragwerks mit Diagonalverstrebung;
- Fig. 4: eine Darstellung einer weiteren alternativen Ausführungsform des Tragwerks mit einer Wandhalterung;
- Fig. 5 a,b,c: eine Seitenansicht einer Haltevorrichtung für ein Wandelement (Fig. 5a), einen Schnitt durch ein Teilelement der Haltevorrichtung (Fig. 5b), und eine perspektivische Ansicht der Haltevorrichtung (Fig. 5c).

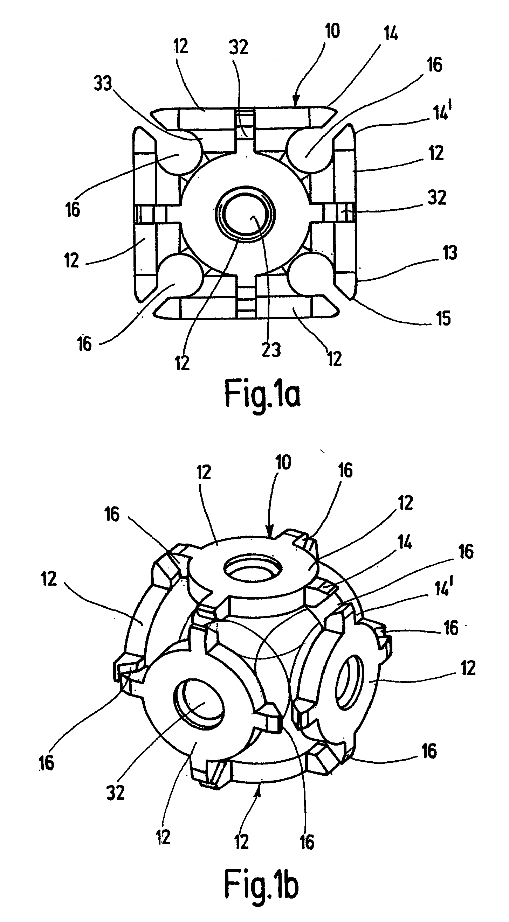

Fig. 1a zeigt einen Schnitt durch einen erfindungsgemäßen Verbindungsknoten 10, und Fig. 1b eine perspektivische Ansicht.

Der Verbindungsknoten 10 hat eine kugelförmige Grundform und weist regelmäßig verteilte Passbohrungen 32 auf, in die nicht gezeigte Streben einsetzbar sind. Es ist jedoch auch eine Ausbildung des Verbindungsknotens 10 als Würfel mit quadratischen Seitenflächen oder als Polyeder möglich. Die Passbohrungen 32 sind auf der Kugeloberfläche von ringförmigen Strebenaufnahmen 12 umgeben, wobei die Ringe breiter sind als hoch und auf sich jeweils umfänglich nach außen erweiternde Stutzen 33 der Passbohrungen 32 aufgesetzt sind. Jede Strebenaufnahme 12 ist zentral auf jeweils einer gedachten Würfelfläche 13 des Verbindungsknotens 10 angeordnet. Von den Strebenaufnahmen 12 gehen kreuzweise angeordnete Arme 14, 14' aus, die parallel zu Kanten 15 der gedachten Würfelfläche 13 und parallel zu dieser Würfelfläche 13 laufen und sich bis zu der Kante 15 der gedachten Würfelfläche 13 erstrecken. Jeder Strebenaufnahme 12 sind jeweils vier auf den Umfang gleichmäßig verteilte Arme 14, 14' zugeordnet, wobei sich die Arme 14 einer Strebenaufnahme 12 mit orthogonal dazu angeordneten Armen 14' einer nächsten orthogonal angeordneten Strebenaufnahme 12 treffen und jeweils eine Öse 16 bilden. Insgesamt weist der Verbindungsknoten 10 sechs Strebenaufnahmen 12 auf, deren Arme 14, 14' insgesamt zwölf Ösen 16 bilden. Die Arme 14 können jeweils beabstandet bleiben. In die Ösen 16 kann jeweils ein nicht gezeigtes hakenförmiges Verbindungselement eingehakt werden, um beispielsweise eine diagonale Verbindung für das gesamte Tragwerk herzustellen.

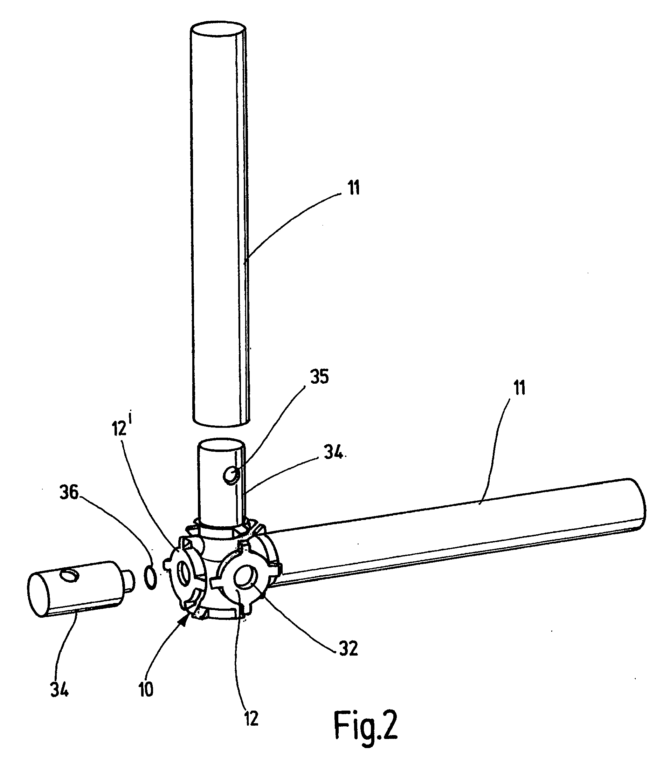

Fig. 2 zeigt eine Ausführungsform eines Tragwerks mit einem Verbindungsknoten 10, dessen Aufbau der Beschreibung zu Fig. 1a und 1b entspricht. Gleiche Elemente werden in den Figuren jeweils gleich bezeichnet. In die Passbohrungen 32 bzw. Strebenaufnahmen 12 des Verbindungsknotens 10 sind Streben 11 beziehungsweise Ansatzstücke 34 für Streben 11 einsetzbar, beispielsweise über eine Steckverbindung oder eine Verschraubung. Es kann auch vorgesehen sein, dass die Verbindung zwischen den Streben 12 und dem Verbindungsknoten 10 magnetisch ausgebildet ist, wobei beispielsweise wenigstens eine Strebe 11 im Bereich des eingesetzten freien Endes einen Magneten aufweist, und ein zugehöriges Gegenstück im Verbindungsknoten 10 ferromagnetisch ausgebildet ist. Je nach Bedarf können die Streben 11 direkt mit dem Verbindungsknoten 10 verbunden sein, oder über Ansatzstücke 34. Die Ansatzstücke 34 weisen eine Fase 35 auf, die als Sichtloch dienen kann und somit eine Oberprüfung der Stabilität der Verbindung erleichtert. Gegebenenfalls kann auch ein Werkzeug über die Fase 35 eingeführt werden. Bei der Montage des Ansatzstücks 34 kann zur Stabilisierung der Verbindung ein Zwischenring 36 zwischen dem Verbindungsknoten 10 und dem Ansatzstück 34 eingefügt werden.

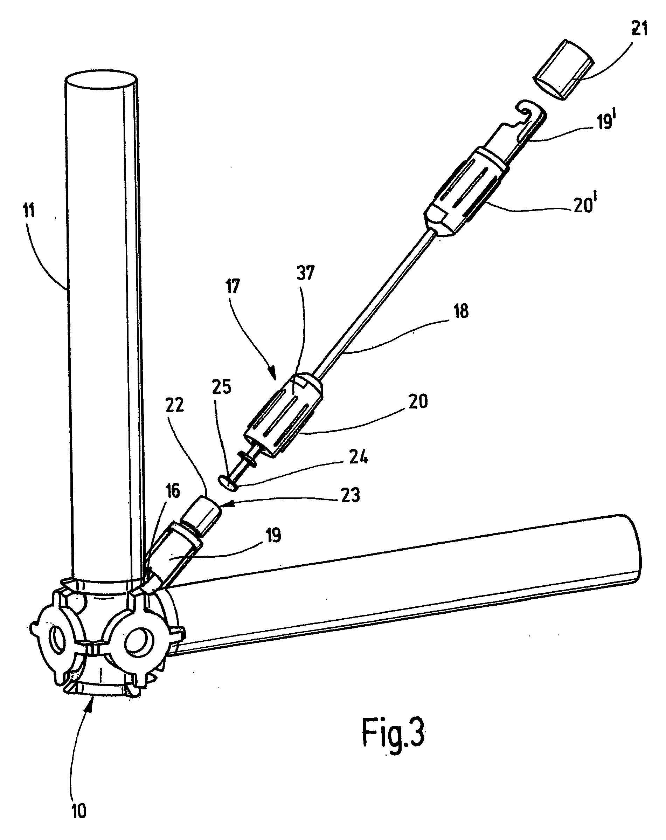

Fig. 3 zeigt eine alternative Ausführungsform eines Tragwerks mit einem Verbindungsknoten 10, dessen Aufbau wiederum der Beschreibung zu Fig. 1 und 2 entspricht. Zur Stabilisierung des Tragwerks ist eine Diagonalstrebe 18 vorgesehen, die mittels eines Verbindungselements 17 mit dem Verbindungsknoten 10 befestigt ist. Das Verbindungselement 17 umfasst ein beidseitig der Diagonalstrebe 18 angeordnetes Hakenelement 19, 19', eine Spannhülse 20, 20' und ein Fixierelement 21, die in der Fig. 3 in einer Explosionsdarstellung gezeigt sind. Das Hakenelement 19, 19' des Verbindungselements 17 ist mit der Öse 16 des Verbindungsknotens 10 selbsthemmend verbunden und im belasteten Zustand unter Zug gesetzt. Das Hakenelement 19, 19' weist an seinem im montierten Zustand vom Verbindungsknoten 10 abgewandten freien Ende 22 eine Aufnahmeöffnung 23 auf, in welche die Diagonalstrebe 18 einführbar ist. Die Diagonalstrebe 18 ist in der Fig. 3 aus Draht gebildet und weist an ihren freien Enden 24 jeweils eine kuppenartige Erweiterung 25 auf, die im montierten Zustand in der entsprechend ausgebildeten Aufnahmeöffnung 23 des Hakenelements 19, 19' einrastet. Das Verbindungselement 17 und die Diagonalstrebe 18 werden mittels der Spannhülse 20, 20' verspannt. Die Spannhülse 20, 20' weist an ihrer Oberfläche eine Griffstruktur 37 auf, um den manuellen Spannvorgang zu erleichtern und ein Abrutschen zu vermeiden.

Im montierten Zustand ist das Verbindungselement 17 von der Fixierhülse 21 umgeben, die ein selbsttätiges Lösen der Verbindung verhindern soll.

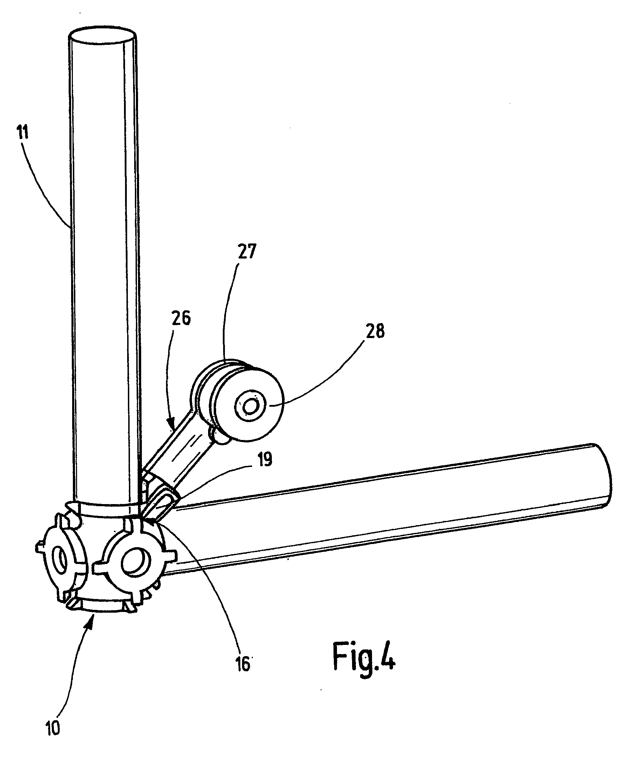

Fig. 4 zeigt eine alternative Ausführungsform eines Tragwerks. Anstelle einer in Fig. 3 gezeigten Diagonalverstrebung ist das Verbindungselement 17 als Haltevorrichtung 26 für ein nicht gezeigtes Wandelement ausgebildet. In gleicher Weise wie zuvor beschrieben weist die Haltevorrichtung 26 ein Hakenelement 19 auf, das in eine Öse 16 eines Verbindungsknotens 10 eingehakt wird. An einem vom Hakenelement 19 abgewandten freien Ende weist die Haltevorrichtung 26 ein erstes scheibenförmiges Element 27 auf. Zudem ist ein entsprechend dimensioniertes zweites scheibenförmiges Element 28 vorgesehen, das in Verbindung mit dem ersten scheibenförmigen Element 27 eine Klemmvorrichtung für ein nicht gezeigtes Wandelement ausbildet.

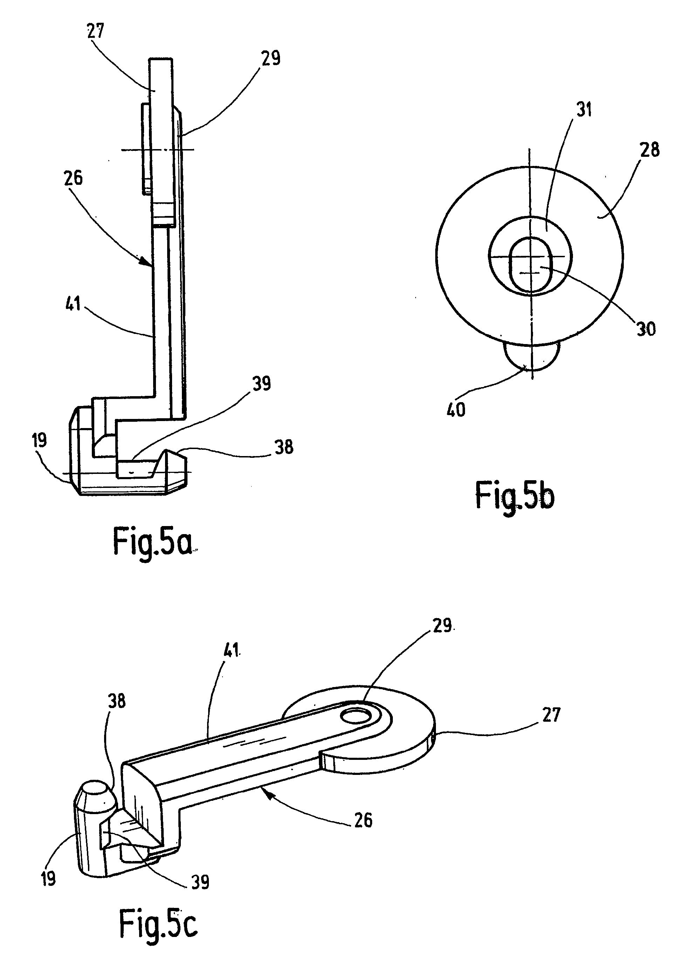

Der genaue Aufbau der Haltevorrichtung 26 ist in den Fig. 5a, 5b und 5c gezeigt, wobei die Fig. 5a eine Seitenansicht der Haltevorrichtung 26 illustriert mit einem Hakenelement 19, einem Trägerelement 41 und einem ersten scheibenförmigen Element 27. Das Hakenelement 19 weist einen Widerhaken 38 auf, wodurch das Hakenelement 19 in der nicht erkennbaren Öse zusätzlich verrasten kann. Ein im montierten Zustand der Öse zugewandter Teilbereich 39 des Hakenelements 19 ist im Querschnitt nicht rund ausgebildet, sondern beidseitig abgeflacht. Dadurch kann eine zusätzliche Arretierung des Hakenelements 19 in der Öse erzielt werden, wenn diese wie oben beschrieben nicht vollständig geschlossen ausgebildet ist. Das Hakenelement 19 ist vorzugsweise so gestaltet, dass es nach Einhängen in die Öse freitragend ist, um eine Montage der flächigen Elemente zu erleichtern. Das erste scheibenförmige Element 27 ist an einem vom Hakenelement 19 abgewandten freien Ende der Haltevorrichtung 26 angeordnet. Eine Grundfläche des ersten scheibenförmigen Elements 27 ist quer zur Längserstreckung des Hakenelements 19 angeordnet. Das erste scheibenförmige Element 27 weist eine zentrale Bohrung 29 auf zur Aufnahme eines nicht gezeigten Verbindungsmittels.

In Fig. 5b ist eine Draufsicht auf ein als Schraubspannhülse ausgestaltetes zweites scheibenförmiges Element 28 dargestellt, das entsprechend dem ersten scheibenförmigen Element 27 dimensioniert ist und eine Lasche 40 aufweist, die als Montagehilfe dienen kann. In dem zweiten scheibenförmigen Element 28 ist eine zentrale Bohrung 30 angeordnet, in der das nicht gezeigte Verbindungsmittel aufgenommen und mit dem scheibenförmigen Element 27 verbunden werden kann. Ein mit einer entsprechenden Bohrung versehenes, nicht gezeigtes Wandelement kann somit zwischen dem ersten und dem zweiten scheibenförmigen Element 27, 28 eingeklemmt werden. Im montierten Zustand können zwischen dem Wandelement und den scheibenförmigen Elementen 27, 28 nicht gezeigte Kunststoffscheiben bzw. Schlauchabschnitte angeordnet sein. Die Bohrung 30 des zweiten scheibenförmigen Elements 28 ist als Langloch ausgestaltet, wodurch vorteilhafterweise eine Stabilisierung der Elemente nach allen Richtungen in der Art eines Adapters erzielt werden kann. Auf dem zweiten scheibenförmigen Element 28 ist um das Langloch 30 herum ein zentraler Abstandshalter 31 angeordnet.

### Bezugszeichen

- 10: Verbindungsknoten
- 11: Streben
- 12: Strebenaufnahmen
- 13: Würfelfläche
- 14,14': Arme
- 15: Kante
- 16: Öse
- 17: Verbindungselement
- 18: Diagonalstrebe
- 19, 19': Hakenelement
- 20, 20': Spannhülse
- 21: Fixierelement
- 22: freies Ende
- 23: Aufnahmeöffnung
- 24: freies Ende von 18
- 25: Erweiterung
- 26: Haltevorrichtung
- 27: erstes scheibenförmiges Element
- 28: zweites scheibenförmiges Element
- 29: Bohrung
- 30: Bohrung
- 31: Abstandshalter
- 32: Passbohrung
- 33: Stutzen
- 34: Ansatzstück
- 35: Fase
- 36: Zwischenring
- 37: Griffstruktur
- 38: Widerhaken
- 39: Teilbereich
- 40: Lasche
- 41: Trägerelement

## Patentansprüche

1. Verbindungsknoten (10) zum kraftschlüssigen Verbinden von Streben (11) eines Tragwerks mit
- sechs Strebenaufnahmen (12), wobei
- jede Strebenaufnahme (12) zentral auf einer gedachten Würfelfläche (13) des Verbindungsknotens (10) angeordnet ist,
**dadurch gekennzeichnet, dass**
- die Strebenaufnahmen (12) im Wesentlichen ringförmig ausgebildet sind,
- wobei jeweils vier auf den Umfang der Strebenaufnahmen (12) gleichmäßig verteilte Arme (14, 14') vorgesehen sind, dass
- von den Strebenaufnahmen (12) die Arme (14, 14') ausgehen, die parallel zu den gedachten Würfelflächen (13) laufen und sich bis zu einer Kante (15) der gedachten Würfelfläche (13) erstrecken,
- und wobei sich die Arme (14) einer Strebenaufnahme (12) mit orthogonal dazu angeordneten Armen (14') einer nächsten Strebenaufnahme (12) treffen und insgesamt zwölf Ösen (16) bilden,
- und wobei zur Herstellung einer diagonalen Verbindung ein Verbindungselement (17) in eine Öse (16) einhakbar ist.

2. Verbindungsknoten nach Anspruch 1, **dadurch gekennzeichnet, dass** das Verbindungselement (17) mit einer Öse (16) in eine selbsthemmende Verbindung bringbar ist, welche im belasteten Zustand unter Zug setzbar ist.

3. Verbindungsknoten nach Anspruch 1 oder 2, **dadurch gekennzeichnet, dass** das Verbindungselement (17) zur Befestigung einer spannbaren Diagonalstrebe (18) vorgesehen ist.

4. Verbindungsknoten nach einem der vorhergehenden Ansprüchen, **dadurch gekennzeichnet, dass** das Verbindungselement (17) wenigstens ein Hakenelement (19, 19'), eine Spannhülse (20, 20') und ein Fixierelement (21) umfasst.

5. Verbindungsknoten nach Anspruch 4, **dadurch gekennzeichnet, dass** das Hakenelement (19, 19') an seinem im montierten Zustand vom Verbindungsknoten (10) abgewandten freien Ende (22) eine Aufnahmeöffnung (23) aufweist, in welche die Diagonalstrebe (18) einführbar ist.

6. Verbindungsknoten nach Anspruch 3 bis 5, **dadurch gekennzeichnet, dass** die Diagonalstrebe (18) an ihren freien Enden (24) jeweils eine Erweiterung (25) aufweist, die im montierten Zustand in der entsprechend ausgebildeten Aufnahmeöffnung (23) des Hakenelements (19, 19') einrastet.

7. Verbindungsknoten nach einem der vorhergehenden Ansprüche 3 bis 6, **dadurch gekennzeichnet, dass** das Verbindungselement (17) und die Diagonalstrebe (18) mittels der Spannhülse (20, 20') verbindbar sind.

8. Verbindungsknoten nach einem der Ansprüche 4 bis 7, **dadurch gekennzeichnet, dass** das Verbindungselement (17) im montierten Zustand von dem Fixierelement (21) umgeben ist.

9. Verbindungsknoten nach Anspruch 3 bis 8, **dadurch gekennzeichnet, dass** die Diagonalstrebe (18) aus Draht gebildet ist.

10. Verbindungsknoten nach Anspruch 3 bis 8, **dadurch gekennzeichnet, dass** die Diagonalstrebe (18) als Stange ausgebildet ist.

11. Verbindungsknoten nach Anspruch 1 oder 2, **dadurch gekennzeichnet, dass** das Verbindungselement (17) als Haltevorrichtung (26) für ein flächig ausgebildetes Element ausgebildet ist.

12. Verbindungsknoten nach Anspruch 11, **dadurch gekennzeichnet, dass** die Haltevorrichtung (26) an einem vom Verbindungselement (17) abgewandten freien Ende ein erstes scheibenförmiges Element (27) aufweist.

13. Verbindungsknoten nach Anspruch 12, **dadurch gekennzeichnet, dass** ein zweites scheibenförmiges Element (28) vorgesehen ist, das in Verbindung mit dem ersten scheibenförmigen Element (27) eine Klemmvorrichtung für ein flächig ausgebildetes Element ausbildet.

14. Verbindungsknoten nach Anspruch 12 oder 13, **dadurch gekennzeichnet, dass** die scheibenförmigen Elemente (27, 28) jeweils eine zentrale Bohrung (29, 30) aufweisen zur Aufnahme eines Verbindungsmittels.

15. Verbindungsknoten nach Anspruch 14, **dadurch gekennzeichnet, dass** die Bohrung (30) des zweiten scheibenförmigen Elements (28) als Langloch ausgebildet ist.

16. Verbindungsknoten nach Anspruch 13 bis 15, **dadurch gekennzeichnet, dass** auf dem zweiten scheibenförmigen Element (28) ein zentraler Abstandshalter (31) angeordnet ist.

17. Verbindungsknoten einem der vorhergehenden Ansprüche, **dadurch gekennzeichnet, dass** ein Verbindungselement (17) zur Herstellung einer Haltevorrichtung (26) für ein flächig ausgebildetes Element vorgesehen ist, welches wenigstens ein Hakenelement (19) und ein erstes scheibenförmiges Element (27) aufweist, das in Verbindung mit einem zweiten scheibenförmigen Element (28) eine Haltevorrichtung (26) für ein flächig ausgebildetes Element ausbildet.

## Claims

1. Connection node (10) for frictionally connecting struts (11) of a supporting framework having
- six strut receiving elements (12), wherein
- each strut receiving element (12) is arranged centrally on an imaginary cube face (13) of the connection node (10),
**characterized in that**
- the strut receiving elements (12) are designed substantially ring-shaped,
- wherein four arms (14, 14') that are uniformly distributed on the circumference of each of the strut receiving elements (12) are provided, that
- the arms (14, 14'), which run parallel to the imaginary cube faces (13) and extend up to an edge (15) of the imaginary cube face (13), extend from the strut receiving elements (12),
- and wherein the arms (14) of a strut receiving element (12) meet the arms (14') of another strut receiving element (12) arranged orthogonal thereto, forming twelve loops (16) altogether;
- and wherein a connection element (17) can be hooked into a loop (16) for producing a diagonal connection.

2. Connection node according to claim 1, **characterized in that** the connection element (17) can be brought into a self-locking connection with a loop (16), which connection can be placed under tension when loaded.

3. Connection node according to claim 1 or 2, **characterized in that** the connection element (17) is provided for attaching a diagonal strut (18).

4. Connection node according to one of the preceding claims, **characterized in that** the connection element (17) includes at least a hook element (19, 19'), a tensioning sleeve (20, 20') and a fixing element (21).

5. Connection node according to claim 4, **characterized in that** the hook element (19, 19') has at its free end (22) facing away from the connection node (10) when assembled, a receiving opening (23) into which the diagonal strut (18) can be inserted.

6. Connection node according to claim 3 to 5, **characterized in that** the diagonal strut (18) has an expansion (25) at each of its free ends (24) that locks in a correspondingly defined receiving opening (23) of the hook element (19, 19') when assembled.

7. Connection node according to one of the preceding claims 3 to 6, **characterized in that** the connection element (17) and the diagonal strut (18) can be connected by the tensioning sleeve (20, 20').

8. Connection node according to one of the preceding claims 4 to 7, **characterized in that** the connection element (17) is enclosed by the fixing element (21) when assembled.

9. Connection node according to claim 3 to 8, **characterized in that** the diagonal strut (18) is made of wire.

10. Connection node according to claim 3 to 8, **characterized in that** the diagonal strut (18) is defined as a rod.

11. Connection node according to claim 1 or 2, **characterized in that** the connection element (17) is defined as holding device (26) for a flat element.

12. Connection node according to claim 11, **characterized in that** the holding device (26) has a first disk-shaped element (27) at a free end facing away from the connection element (17).

13. Connection node according to claim 12, **characterized in that** a second disk-shaped element (28) is provided that in connection with the first disk-shaped element (27) defines a clamping device for a flat element.

14. Connection node according to claim 12 or 13, **characterized in that** the disk-shaped elements (27, 28) each have a central bore (29, 30) for receiving a connection member.

15. Connection node according to claim 14, **characterized in that** the bore (30) of the second disk-shaped element (28) is defined as longitudinal hole.

16. Connection node according to claim 13 to 15, **characterized in that** a central spacer (31) is arranged on the second disk-shaped element (28).

17. Connection node according to any of the preceding claims, **characterized in that** a connection element (17) is provided for producing a holding device (26) for a flat element, comprising at least one hook element (19) and a first disk-shaped element (27), which, in connection with a second disk-shaped element (28), defines a holding device (26) for a flat element.

## Revendications

1. Noeud de raccord (10) pour la liaison de forces des entretoises (11) d'une structure porteuse, avec
- six logements d'entretoise (12),
- chaque logement d'entretoise (12) étant disposé de manière centrale sur une surface de cube (13) imaginaire du noeud de raccord (10),
**caractérisé en ce que**
- les logements d'entretoise (12) sont sensiblement de configuration annulaire,
- à chaque fois quatre bras (14, 14') étant prévus de manière uniformément distribuée sur la circonférence des logements d'entretoise (12), **en ce que**
- les bras (14, 14') partent au niveau des logements d'entretoise (12) et s'étendent de manière parallèle aux surfaces de cube (13) imaginaires, jusqu'à une arête (15) de la surface de cube (13) imaginaire,
- et les bras (14) d'un logement d'entretoise (12) se rencontrant avec des bras (14') d'un logement d'entretoise (12) suivant disposés orthogonalement par rapport à ceux-ci, et formant un nombre totale de douze oeillets (16),
- et un connecteur (17) pouvant être accroché dans un oeillet (16) pour établir une connexion diagonale.

2. Noeud de raccord selon la revendication 1, **caractérisé en ce que** le connecteur (17) peut être mis en connexion autobloquante avec un oeillet (16), la connexion pouvant être mis sous tension à l'état chargé.

3. Noeud de raccord selon la revendication 1 ou 2, **caractérisé en ce que** le connecteur (17) est prévu pour la fixation d'une entretoise diagonale (18) qui peut être serrée.

4. Noeud de raccord selon l'une des revendications précédentes, **caractérisé en ce que** le connecteur (17) comprend au moins un élément de crochet (19, 19'), une douille de serrage (20, 20') et un élément de fixation (21).

5. Noeud de raccord selon la revendication 4, **caractérisé en ce que** l'élément de crochet (19, 19') présente, à son extrémité (22) libre et opposée au noeud de raccord (10) à l'état assemblé, une ouverture de logement (23) dans laquelle l'entretoise diagonale (18) peut être insérée.

6. Noeud de raccord selon la revendication 3 à 5, **caractérisé en ce que** l'entretoise diagonale (18) respectivement présente une extension (25) à ses extrémités (24) libres, l'extension s'engageant, à l'état assemblé, dans l'ouverture de logement (23) de l'élément de crochet (19, 19') configurée conformément.

7. Noeud de raccord selon l'une quelconque des revendications précédentes 3 à 6, **caractérisé en ce que** le connecteur (17) et l'entretoise diagonale (18) peuvent être raccordés au moyen de la douille de serrage (20, 20').

8. Noeud de raccord selon l'une quelconque des revendications 4 à 7, **caractérisé en ce que** le connecteur (17) est entouré par l'élément de fixation (21) à l'état assemblé.

9. Noeud de raccord selon la revendication 3 à 8, **caractérisé en ce que** l'entretoise diagonale (18) est formé en fil.

10. Noeud de raccord selon la revendication 3 à 8, **caractérisé en ce que** l'entretoise diagonale (18) est configurée sous forme de tige.

11. Noeud de raccord selon la revendication 1 ou 2, **caractérisé en ce que** le connecteur (17) est configuré sous forme de dispositif de retenue (26) pour un élément de configuration plane.

12. Noeud de raccord selon la revendication 11, **caractérisé en ce que** le dispositif de retenue (26) présente un premier élément en forme de disque (27) à une extrémité libre et opposée au connecteur (17).

13. Noeud de raccord selon la revendication 12, **caractérisé en ce qu'**un deuxième élément en forme de disque (28) est prévue, qui forme, en liaison avec le premier élément en forme de disque (27), un dispositif de pincement pour un élément de configuration plane.

14. Noeud de raccord selon la revendication 12 ou 13, **caractérisé en ce que** les éléments en forme de disque (27, 28) respectivement présentent un perçage central (29, 30) pour le logement d'un moyen de raccord.

15. Noeud de raccord selon la revendication 14, **caractérisé en ce que** le perçage (30) du deuxième élément en forme de disque (28) est configuré sous forme de trou oblong.

16. Noeud de raccord selon la revendication 13 à 15, **caractérisé en ce qu'**un espaceur central (31) est disposé sur le deuxième élément en forme de disque (28).

17. Noeud de raccord selon l'une quelconque des revendications précédentes, **caractérisé en ce qu'**un connecteur (17) pour la fabrication d'un dispositif de retenue (26) pour un élément de configuration plane est prévu qui comprend au moins un élément de crochet (19) et un premier élément en forme de disque (27) formant, en liaison avec un deuxième élément en forme de disque (28), un dispositif de retenue (26) pour un élément de configuration plane.
